# EUROPEAN PATENT APPLICATION

(11) **EP 3 815 831 A1**
(43) Date of publication of application: **05.05.2021**
(21) Application number: 20204659.5
(22) Date of filing: 29.10.2020
(51) Int. Cl.: B23K 9/095, B23K 9/10, B23K 9/173, B23K 9/32

(54) **FABRICATION COMPUTING DEVICE, WELDING SYSTEM WITH SUCH DEVICE, AND METHOD OF INTERFACING WITH A FABRICATION PROCESS**

(30) Priority: 30.10.2019 US 201916668642
(71) Applicant: Lincoln Global, Inc., Santa Fe Springs, CA 90670 (US)
(72) Inventor: MATTHEWS, William Thomas, Chesterland, OH 44026 (US); DANIEL, Joseph A., Sagamore Hills, OH 44067 (US)
(74) Representative: Grosse Schumacher Knauer von Hirschhausen

(57) **Abstract**

The invention described herein generally pertains to a welder system (100) that includes one or more welding power sources (110), an input device (112) having a display and an imaging device, and a fabrication computer device (125). The fabrication computing device (125) includes a processor (127) configured to execute computer-executable instructions that configure the fabrication computing device (125) to receive an informational input from the input device (112). The informational input is based at least in part on an image captured by the imaging device of the input device (112), and the informational input is indicative of one or more of a weld procedure, an operator identifier, a welding power source identifier, a part identifier, or an operation status. The fabrication computing device (125) is further configured to control operation of at least one welding power source (110) of the one or more welding power sources based on the informational input received.

## Description

### Technical Field

The invention described herein pertains generally to a system and method that utilizes an input device that interfaces with a fabrication computing device to configure and track various parameters of a fabrication operation, and more specifically to a fabrication computing device, a welding system and a method for interfacing with a fabrication process according to the preamble of claim 1, 7 respectively 10.

### Background of the Invention

Welding systems reside at the core of the modern industrial age. From massive automobile assembly operations to automated manufacturing environments, these systems facilitate joining in ever more complicated manufacturing operations. One such example of a welding system includes an electric arc welding system. This may involve movement of a consumable electrode, for example, toward a workpiece while current is passed through the electrode and across an arc developed between the electrode and the workpiece. The electrode may be a non-consumable or consumable type, wherein portions of the electrode may be melted and deposited on the workpiece. Often, hundreds or perhaps thousands of welders are employed to drive multiple aspects of an assembly process, wherein sophisticated controllers enable individual welders to operate within relevant portions of the process. For example, some of these aspects relate to control of power and waveforms supplied to the electrode, movements or travel of a welding tip during welding, electrode travel to other welding points, gas control to protect a molten weld pool from oxidation at elevated temperatures and provide ionized plasma for an arc, and other aspects such as arc stability to control the quality of the weld. These systems are often deployed over great distances in larger manufacturing environments and many times are spread across multiple manufacturing centers. Given the nature and requirements of modern and more complex manufacturing operations however, welding systems designers, architects and suppliers face increasing challenges in regard to upgrading, maintaining, controlling, servicing and supplying various welding locations. Unfortunately, many conventional welding systems operate in individually controlled and somewhat isolated manufacturing locations in regard to the overall assembly process. Thus, controlling, maintaining, servicing, supplying, and tracking multiple and isolated locations in large centers, and/or across the globe, has become more challenging, time consuming and expensive. Moreover, managing accurate records or data associated with controlling, maintaining, servicing, and supplying multiple locations has become more challenging.

As mentioned, welding environments are often isolated and geographically removed from one another and what is needed is an improved welding architecture, specifically an improved fabrication computing device, welding system and method for interfacing with a fabrication process according to the preamble of claim 1, 7 respectively 10, to facilitate monitoring, configuration, control, maintenance, and/or supply to multiple welding systems that may be distributed across large areas or regions.

### Summary of the Invention

In accordance with the present invention, there is provided a welder system according to claim 7 that includes one or more welding power sources, an input device having a display and an imaging device, and a fabrication computer device according to claim 1. The fabrication computing device includes a processor configured to execute computer-executable instructions that configure the fabrication computing device to receive an informational input from the input device. The informational input is based at least in part on an image captured by the imaging device of the input device, and the informational input is indicative of one or more of a weld procedure, an operator identifier, a welding power source identifier, a part identifier, or an operation status. The fabrication computing device is further configured to control operation of at least one welding power source of the one or more welding power sources based on the informational input received.

The invention further provides in one embodiment a method for interfacing with a fabrication process according to claim 10, the method including receiving a first informational input from an input device; enabling a welder power source based on the first informational input; receiving one or more welding parameters pertaining to welding activity from the welder power source; and associating the one or more welding parameters with an operator identification.

In one embodiment, a fabrication computing device includes a processor, wherein the processor is configured to execute computer-executable instructions that configure the fabrication computing device to receive an informational input from an input device. The informational input is based at least in part on an image captured by an imaging device of the input device, and the informational input is indicative of one or more of a weld procedure, an operator identifier, a welding power source identifier, a part identifier, or an operation status. The fabrication computing device is further configured to control operation of at least one welding power source of the one or more welding power sources based on the informational input received.

These and other objects, features and embodiments of this invention will be evident when viewed in light of the drawings, detailed description and appended claims.

### Brief Description of the Drawings

The invention may take physical form in certain parts and arrangements of parts, a preferred embodiment of which will be described in detail in the specification and illustrated in the accompanying drawings which form a part hereof, and wherein:
*Fig. 1* is a block diagram illustrating a welding system that utilizes a set of data based on an informational input collected from an input device;
*Fig.* 2 is a block diagram illustrating a welding environment with a plurality of welder power sources that interface to an input device via a local, remote, or cloud database;
*Fig.* 3 is a block diagram illustrating a welding system that utilizes one or more indicia to identify a command input and an informational input;
*Fig.* 4 is a flow diagram illustrating a fabrication method performed while utilizing a fabrication computing device;
*Fig.* 5 is a flow diagram illustrating a fabrication method performed by a fabrication computing device;
*Fig.* 6 is a flow diagram illustrating a fabrication method performed by a fabrication computing device; and
*Fig.* 7 is an illustration of an exemplary input device.

### Detailed Description of the Invention

Embodiments of the invention relate to methods and systems that relate to controlling operation of at least one power source based on one or more informational inputs received from an input device. In an embodiment, weld information is obtained from a welding power source and stored in association with at least a portion of the informational input received from the input device. In an embodiment, the informational input is utilized to set a parameter for the welder power source. By way of example and not limitation, an input device can be a barcode scanner and/or a wearable computing device that reads a command input (e.g. a first barcode or other indicia) and an informational input (e.g., a second barcode or other indicia). The command input can indicate a context for the informational input. The informational input can indicate one or more of a welding procedure, an operator identifier, a welding power source identifier, a part identifier, or an operation status. The informational input can point to a storage location of a set of data or the informational input can include the set of data. Based on the command input and/or the informational input, the set of data can be utilized as a configuration setting for the target welder power source or linked (e.g., associated, corresponded, related, among others) to a portion of weld data of the assigned welder power source.

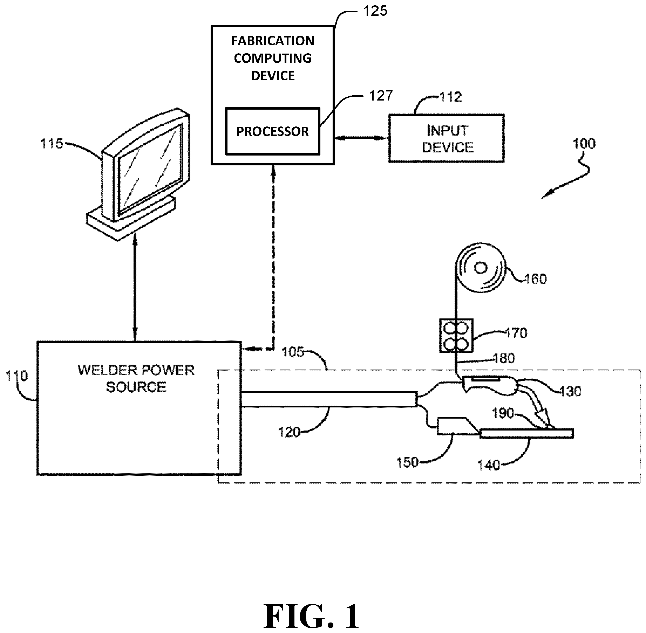

The best mode for carrying out the invention will now be described for the purposes of illustrating the best mode known to the applicant at the time of the filing of this patent application. The examples and figures are illustrative only and not meant to limit the invention, which is measured by the scope and spirit of the claims. Referring now to the drawings, wherein the showings are for the purpose of illustrating an exemplary embodiment of the invention only and not for the purpose of limiting same, *Fig. 1* illustrates a schematic block diagram of an exemplary embodiment of welding system **100** including welding circuit path **105.** Welding system **100** includes welder power source **110** and display **115** operationally connected to welder power source **110.** Alternatively, display **115** may be an integral part of welder power source **110.** For instance, display 115 can be incorporated into welder power source **110,** a stand-alone component (as depicted), or a combination thereof. Welding system **100** further includes welding cable **120,** welding tool **130,** workpiece connector **150,** spool of wire **160,** wire feeder **170,** wire **180,** and workpiece **140.** Wire **180** is fed into welding tool **130** from spool **160** via wire feeder **170,** in accordance with an embodiment of the present invention. In accordance with another embodiment of the present invention, welding system **100** does not include spool of wire **160,** wire feeder **170,** or wire **180** but, instead, includes a welding tool comprising a consumable electrode such as used in, for example, stick welding. In accordance with various embodiments of the present invention, welding tool **130** may include at least one of a welding torch, a welding gun, and a welding consumable.

Welding circuit path **105** runs from welder power source **110** through welding cable **120** to welding tool **130,** through workpiece **140** and/or to workpiece connector **150,** and back through welding cable **120** to welder power source **110.** During operation, electrical current runs through welding circuit path **105** as a voltage is applied to welding circuit path **105.** In accordance with an exemplary embodiment, welding cable **120** comprises a coaxial cable assembly. In accordance with another embodiment, welding cable **120** comprises a first cable length running from welder power source **110** to welding tool **130,** and a second cable length running from workpiece connector **150** to welder power source **110.**

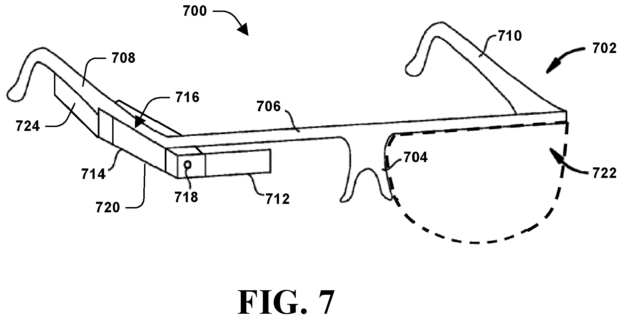

Welding system **100** includes input device **112** that collects and/or receives various inputs based on an indicia. One type of input is an informational input that is indicative of a parameter pertaining to a fabrication and/or welding operation. A second type of input is a command input that indicates a context for the informational input. Generally, the input device **112** collects a command input prior to the informational input to inform the fabrication computing device **125** regarding the context of the subsequent informational input. For instance, input device **112** can be, but is not limited to being, a wearable computing device **700** (described further with regards to Fig. 7), a smartphone, a personal data assistant (PDA), a tablet computer, a barcode scanner, a scanner, a camera, a barcode reader, a numeric detector (e.g., optical character recognition device), a microphone, and the like. Moreover, it is to be appreciated and understood that input device **112** can be utilized by one or more users to provide inputs (e.g., first input, second input) for one or more welder power sources. Further, by way of example and not limitation, the indicia can be a barcode (e.g., a two-dimensional barcode, a three-dimensional barcode, a Quick Response (QR) code, a combination of black and/or white graphics that can be scanned, among others), a radio frequency identification (RFID) signal, a biometric, a magnetic strip reader, a serial number, a wireless signal, among others.

As referenced above, the command input identifies a type of a set of data to be received as an informational input. By way of example and not limitation, the set of data can be or can relate to the following: contact tip replacement; liner replacement; start/stop recording of a condition of a contact tip or a liner for predictive models (e.g., possibly a rating on a scale showing part failure or quality of part); consumable lot code and/or consumable type; with a given consumable type, the available welding modes and operations for a power source (e.g., welder mode A for consumable B, among others) which mitigates setup of welding process and reduces risk of selecting an incorrect welding mode; consumable replaced; record an amount or consumable remaining before replacing (e.g., this information can be used to update density calculation and accuracy of consumable recording calculations); machine calibration (e.g., informational input can include information about calibration process such as a previous and final value(s)); push-pull calibration (e.g., pull gun can have a factory calibration indicia with calibration information that is sent to a controlling push system); record reason for welding problem (e.g., oil on part, rusty part, part defective, torch failure, power source failure, fixture failure, part fit-up problem, wrong shielding gas, wrong contact tip, wrong wire, wrong flux, any type of welding problem/failure, and the like); setup welding parameters; a WPS (Welding Procedure Specification); a part number to weld which then recalls the proper WPS(s) for the part; limits and other process monitoring parameters; backup and restore a portion of settings in a welder power source; one to one options/commands (e.g., option/command to one welder power source); one-to-many options/commands (e.g., option/command to one or more welder power sources) such as, for instance, set a time clock in one or more power sources; operator or welder information such as employee identification (e.g., tracking working hours, clock-in time, clock-out time, downtime, breaks, lunch, and other events, and the like); a consumable material for a weld process; a maintenance for a power source; a repair for a power source; an inspection; a welding parameter; a workpiece parameter; a weld procedure identification; a welding power source identifier; an operator identification, among others.

One or more welder power source(s) (e.g., welder power source **110**) aggregates data respective to a respective welding process to which the welder power source is providing power to implement. Such collected data relates to each welder power source and is herein referred to as "weld data." Weld data can include welding parameters and/or information specific to the particular welding process the welder power source is supplying power. For instance, weld data can be an output (e.g., a waveform, a signature, a voltage, a current, among others), a weld time, a power consumption, a welding parameter for a welding process, a welder power source output for the welding process, and the like.

Input device **112** receives and/or aggregates an informational input based on an indicia, wherein the informational input either is the set of data or provides a location for the set of data. In an embodiment, the command input provides target welder power source and a type of the set of data and the informational input is the set of data. In another embodiment, the informational input provides a location for the set of data to be retrieved. It is to be appreciated that the location of the set of data can be a local storage location, a remote storage location, a cloud storage location, and/or a combination thereof.

Subsequent to receiving at least one of the command input and/or the informational input via input device **112,** fabrication computing device **125** receives and/or aggregates at least one of the identification of the type of the set of data, the welder power source that is to receive the set of data (e.g., a welder power source to which a set of data is to be communicated can be also referred to as a "assigned welder power source"), the set of data, or a location to obtain the set of data. Fabrication computing device **125** associates the set of data (e.g., located via the informational input) to weld data being collected by welder power source **110,** wherein the association of the set of data to the weld data for each welder power source can be, but is not limited to being, a tag, a metadata tag, a link, a key, an appending of data, and the like. In an embodiment, fabrication computing device 125 communicates the set of data to the assigned welder power source in which the target welder power source utilizes the set of data as a configuration setting.

In one embodiment, fabrication computing device **125** is a computer operable to execute the disclosed methodologies and processes, including methods **500** and **600** described herein. In order to provide additional context for various aspects of the present invention, the following discussion is intended to provide a brief, general description of a suitable computing environment in which the various aspects of the present invention may be implemented. While the invention has been described above in the general context of computer-executable instructions that may run on one or more computers, those skilled in the art will recognize that the invention also may be implemented in combination with other program modules and/or as a combination of hardware and/or software. Generally, program modules include routines, programs, components, data structures, etc., that perform particular tasks or implement particular abstract data types.

Moreover, those skilled in the art will appreciate that the inventive methods may be practiced with other computer system configurations, including single-processor or multiprocessor computer systems, minicomputers, mainframe computers, as well as personal computers, handheld computing devices, microprocessor-based or programmable consumer electronics, and the like, each of which may be operatively coupled to one or more associated devices. The illustrated aspects of the invention may also be practiced in distributed computing environments where certain tasks are performed by remote processing devices that are linked through a communications network. In a distributed computing environment, program modules may be located in both local and remote memory storage devices. For instance, a remote database, a local database, a cloud-computing platform, a cloud database, or a combination thereof can be utilized with fabrication computing device **125.**

The fabrication computing device **125** can utilize an exemplary environment for implementing various aspects of the invention including a computer, wherein the computer includes a processor **127,** a system memory and a system bus. The system bus couples system components including, but not limited to the system memory to the processing unit. The processor **127** may be any of various commercially available processors. Dual microprocessors and other multi-processor architectures also can be employed as the processor **127.**

The system bus can be any of several types of bus structure including a memory bus or memory controller, a peripheral bus and a local bus using any of a variety of commercially available bus architectures. The system memory can include read only memory (ROM) and random access memory (RAM). A basic input/output system (BIOS), containing the basic routines that help to transfer information between elements within fabrication computing device **125,** such as during start-up, is stored in the ROM.

Fabrication computing device **125** can further include a hard disk drive, a magnetic disk drive, e.g., to read from or write to a removable disk, and an optical disk drive, e.g., for reading a CD-ROM disk or to read from or write to other optical media. Fabrication computing device **125** can include at least some form of computer readable media. Computer readable media can be any available media that can be accessed by the computer. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other magnetic storage devices, or any other medium which can be used to store the desired information and which can be accessed by fabrication computing device **125.**

Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, Radio Frequency (RF), Near Field Communications (NFC), Radio Frequency Identification (RFID), infrared, and/or other wireless media. Combinations of any of the above should also be included within the scope of computer readable media.

A number of program modules may be stored in the drives and RAM, including an operating system, one or more application programs, other program modules, and program data. The operating system in fabrication computing device **125** can be any of a number of commercially available operating systems.

In addition, a user may enter commands and information into the computer through a keyboard and a pointing device, such as a mouse. Other input devices may include a microphone, an IR remote control, a track ball, a pen input device, a joystick, a game pad, a digitizing tablet, a satellite dish, a scanner, or the like. These and other input devices are often connected to the processing unit through a serial port interface that is coupled to the system bus, but may be connected by other interfaces, such as a parallel port, a game port, a universal serial bus ("USB"), an IR interface, and/or various wireless technologies. A monitor (e.g., display **115**), or other type of display device, may also be connected to the system bus via an interface, such as a video adapter. Visual output may also be accomplished through a remote display network protocol such as Remote Desktop Protocol, VNC, X-Window System, etc. In addition to visual output, a computer typically includes other peripheral output devices, such as speakers, printers, etc.

A display (in addition or in combination with display **115**) can be employed with fabrication computing device **125** to present data that is electronically received from the processing unit. For example, the display can be an LCD, plasma, CRT, etc. monitor that presents data electronically. Alternatively or in addition, the display can present received data in a hard copy format such as a printer, facsimile, plotter etc. The display can present data in any color and can receive data from fabrication computing device **125** via any wireless or hard wire protocol and/or standard. In another example, fabrication computing device **125** and/or system **100** can be utilized with a mobile device such as a cellular phone, a smart phone, a tablet, a portable gaming device, a portable Internet browsing device, a Wi-Fi device, a Portable Digital Assistant (PDA), among others.

The computer can operate in a networked environment using logical and/or physical connections to one or more remote computers, such as a remote computer(s). The remote computer(s) can be a workstation, a server computer, a router, a personal computer, microprocessor based entertainment appliance, a peer device or other common network node, and typically includes many or all of the elements described relative to the computer. The logical connections depicted include a local area network (LAN) and a wide area network (WAN). Such networking environments are commonplace in offices, enterprise-wide computer networks, intranets and the Internet.

When used in a LAN networking environment, the computer is connected to the local network through a network interface or adapter. When used in a WAN networking environment, the computer typically includes a modem, or is connected to a communications server on the LAN, or has other means for establishing communications over the WAN, such as the Internet. In a networked environment, program modules depicted relative to the computer, or portions thereof, may be stored in the remote memory storage device. It will be appreciated that network connections described herein are exemplary and other means of establishing a communications link between the computers may be used.

Alternatively or in addition, a local or cloud (e.g., local, cloud, remote, among others) computing platform can be utilized for data aggregation, processing, and delivery. For this purpose, the cloud computing platform can include a plurality of processors, memory, and servers in a particular remote location. Under a software-as-a-service paradigm, a single application is employed by a plurality of users to access data resident in the cloud. In this manner, processing requirements at a local level are mitigated as data processing is generally done in the cloud, thereby relieving user network resources. The software-as-a-service application allows users to log into a web-based service (e.g., via a web browser) which hosts all the programs resident in the cloud.

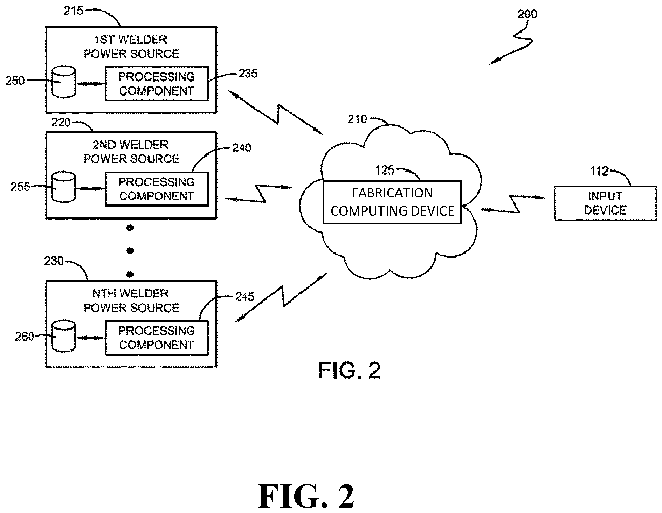

Turning to *Fig. 2**,* system **200** illustrates a welding environment with a plurality of welder power sources that interface to an input device **112** via a local, remote, or cloud database. System **200** includes a plurality of welder power sources such as first welder power source **215,** second welder power source **220** to Nth welder power source **230,** where N is a positive integer. In an embodiment, each welder power source includes a processing component **235, 240,** and **245,** that is used to evaluate data related to each welder power source as well as data related to an enterprise-wide welding operation. Data from each processing component **235, 240,** and **245** is transmitted to the local or cloud database (e.g., local database, cloud database, remote database, among others) computing platform **210** for further processing.

In an embodiment, each welder power source further includes a local data store. For instance, first welder power source **215** includes processing component **235** and data store **250,** second welder power source **220** includes processing component **240** and data store **255,** and Nth welder power source **230** includes processing component **245** and data store **260.** It is to be appreciated that system **200** includes fabrication computing device **125** hosted by computing platform **210** in which each welder power source includes a distributed and respective processing component. Yet, it is to be understood that fabrication computing device **125** (and distributed processing components **235, 240,** and **245**) can be a stand-alone component in each welder power source or a stand-alone component in the computing platform **210.**

Each welder power source aggregates or receives weld data or local data associated with a respective welding process that the particular welder power source is supplying power. The weld data or local data for a welder power source is stored in a respective local data store (e.g., data stores **250, 255,** and **260**). Yet, it is to be appreciated and understood that each welder power source can include a local data store (as depicted), a collective and shared remote data store, a collective and shared local data store, a cloud data store hosted by computing platform **210,** or a combination thereof.

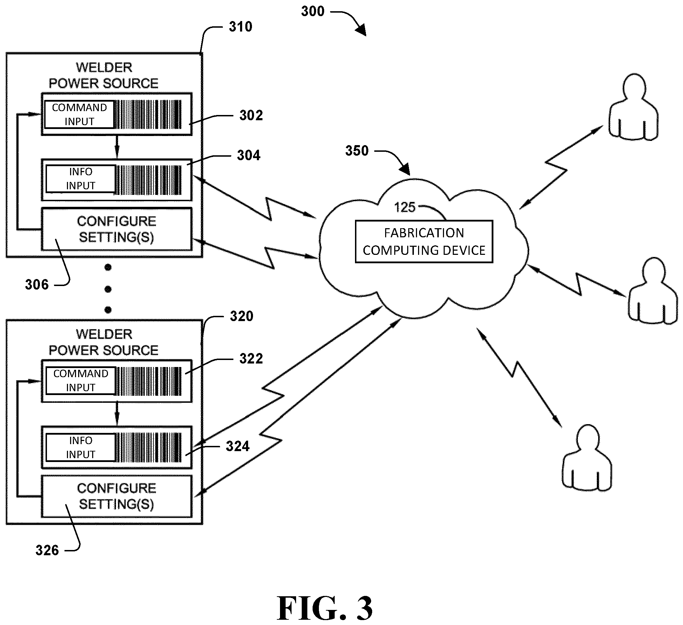

*Fig. 3* illustrates welding system **300** that utilizes a command input to identify a type of a set of data and an informational input to identify a location of the set of data, or the set of data itself. System 300 is employed to facilitate welding system setup by scanning or reading one or more indicia. The following example relates to an indicia that is a barcode and is used solely for example and is not to be seen as limiting on the subject innovation. In particular, it is to be appreciated and understood that any suitable indicia can be utilized. In this example, welder power sources **310, 320** each have a plurality of configurable parameters that are adjusted to accommodate various weld operations. Such parameters can include units of measure, sense lead setup, work point in trim/volts or wfs/amps, wire feed speed, current, and other suitable parameters. In order to provide straightforward data entry that does not require the use of a keyboard / mouse, a barcode scanner can be employed along with a sheet of barcodes. The subject embodiments provide an advantage over conventional systems as an industrial welding environment is generally unsuitable for the operation of input devices such as a mouse, keyboard or other mechanically intensive components. In contrast to these devices, barcode scanners are generally hermetically sealed and able to withstand harsh environmental conditions. Moreover, barcode scanner use does not require operator interaction beyond aiming and pulling a trigger, which simplifies input into system **300.** Moreover, input errors can be mitigated as the operator simply selects an appropriate input from a barcode sheet in place of entering a series of keys and/or mouse clicks. In an embodiment where the wearable computing device **700** is employed as the input device **112** (as detailed below in reference to Fig. 7), a user can simply look in the direction of an indicia to receive the indicia as either a command input or an informational input. The use of the wearable computer device **700** eliminates the need for a user to use one or more hands to read an indicia.

In this example, a first sheet can include prompts, as provided in command inputs **302, 322,** to signal that data for a particular field will be entered subsequently. Other sheets can include the barcodes for such fields, wherein data is entered upon scanning of the informational input **304, 324.** In this manner, a first barcode (command input **302, 322**) is scanned to prompt insertion of data into a field. A second barcode (informational input **304, 324**) is then scanned to insert said data. For this purpose, an input device **112** can be coupled to each welder power source (e.g, via a hardwire or wireless protocol). In another embodiment, the input device **112** is not coupled or associated with a particular welder power source until the user uses the input device **112** to select a welder power source or the user is assigned a welder power source based on other informational inputs such as weld joint ID, operator ID, or Welding Procedure Specification (WPS).

Once the second barcode is scanned, it is sent to a local or cloud database (e.g., local database, cloud database, remote database, among others) computing platform **350** for processing via fabrication computing device **125.** In an embodiment, the second barcode is correlated to particular job data and/or weld system presets to setup or configure various aspects of the welding machine. A lookup table or other suitable component can be employed to facilitate this correlation between the bar code and rule sets, which are preconfigured and stored for subsequent retrieval from the local or cloud database (e.g., local database, cloud database, remote database, among others). The rule sets and/or parameter values are then transmitted down from the local or cloud database (e.g., local database, cloud database, remote database, among others) to the respective welder power source to configure settings at **306, 326.** This process can be repeated as necessary to register / configure each welder power source, identify a user, manage access to a user, identify actions by a user, and to set values for substantially any parameter associated with the welder power source. In an embodiment, the field prompt and field code is populated using only local resources, such as an onboard memory. In this example, it is unnecessary to request and receive information from a remote source.

In one embodiment, the command input and the informational input are included in a single indicia. For example, a single indicia can include a first portion of data indicating a command input and a second portion of data indicating an informational input. In this embodiment, the input device **112** can scan the single indicia and transmit both the command input (providing context for the informational input) and the informational input to the fabrication computing device **125.**

In another example, informational inputs **304, 324,** can relate to consumable type with welder power source **310, 320.** In an embodiment, a barcode associated with the consumable (e.g., lot number) is read to automatically set up an entire welding power system. Quality information can also be downloaded that are related to each lot code, wherein a quality certificate is generated via a web application. Such information can include lot code controlled chemistry, specially designed chemistry, or other information specific to a particular lot of consumables. In an example, an active link is be presented to a user, which is employed to retrieve a quality certificate. In this manner, a user can identify specific consumable lots for each weld to facilitate enhanced quality control.

With the various types of the set of data and the various sets of data, fabrication computing device **125** can create a command sheet. Fabrication computing device **125** can provide a configurable application with setup wizard(s) or widget(s) that allow setup of the command sheet with specific options/commands desired for a welder power source or a work station using a welder power source.

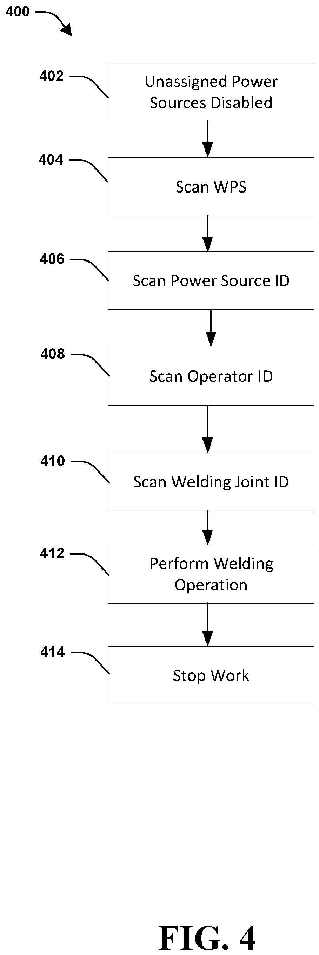

Sequentially, the following occurs as illustrated in the flow diagram **400** of *Fig. 4* which depicts a method performed by a user conducting a welding process using a welder power source **110** that is interfaced with a fabrication computing device **125.** At reference numeral **402,** all unassigned welder power sources in a group of welder power sources are disabled. While disabled, a welder power source **110** is effectively "locked out", thus preventing a user from operating the welder power source **110.** To begin a fabrication process, a user can utilize the input device **112** to send various informational inputs to the fabrication computing device **125.** For example, the input device can scan various indicia to indicate the informational inputs. At reference numeral **404,** the user can scan a WPS identification. The WPS identification can be included on and scanned directly from the WPS form. At reference numeral **406,** the user can scan a power source identification. The power source identification can be included directly on the particular welder power source, on a command sheet, or on a WPS sheet. At reference numeral **408,** the user can scan the user's operator identification. For example, the operator identification can be included and scanned directly from the user's identification badge. At reference numeral **410,** the user can scan a welding joint identification. The welding joint identification can be included as an indicia directly on the welding joint itself, or it can be included on a command sheet or WPS. It should be appreciated that depending on differences in various fabrication processes, not all scans of steps **404, 406, 408,** and **410** are required. Further, in certain embodiments, the scans may take place in a different order than depicted in Fig. 4. In certain embodiments, while performing various scans, the informational input may be preceded by a command input to provide the fabrication computing device **125** with context for the informational input.

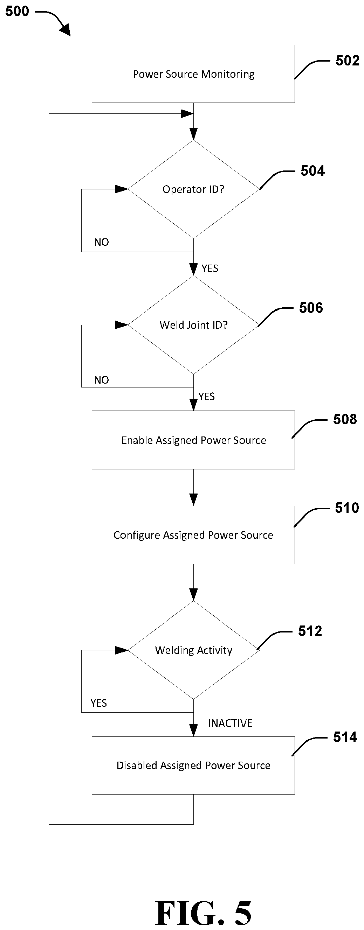

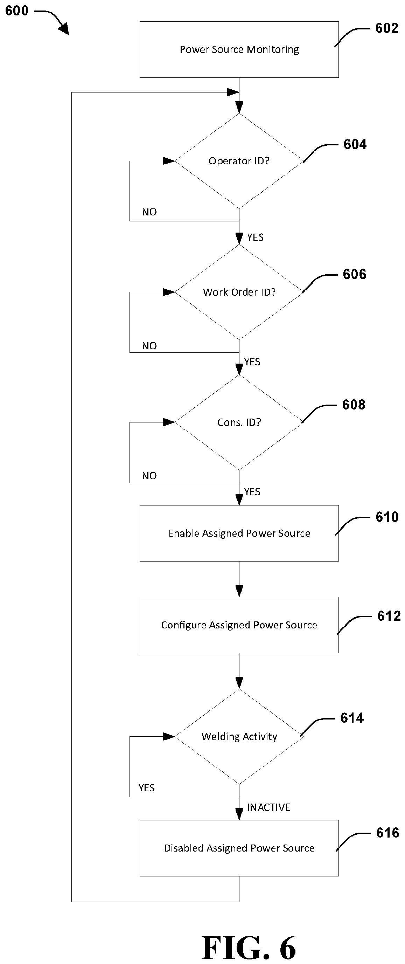

After receiving one or more of the informational inputs provided by the input device **112** during steps **404, 406, 408,** and **410,** a welder power source **110** is enabled and the user can perform a welding operation at reference numeral **412.** While performing the welding operation, the user can receive guidance or instructions on the display of the input device **112.** For example, the user can receive an image of a weld joint to be welded, or instructions regarding how a weld should be performed or a further informational input to be scanned. At reference numeral **414,** the user stops work. After a predetermined amount of time, the welder power supply can become disabled and locked out as described further below with reference to Fig. 5 and Fig. 6. Once the welder power source **110** becomes disabled, the user may be required to restart method **400** to provide the proper informational inputs necessary to enable the welder power source **110** to continue the welding operation.

The following occurs as illustrated in the flow diagram **500** of *Fig. 5**.* Flow diagram **500** relates to an embodiment of a fabrication method performed by a fabrication computing device **125.** At reference numeral **502,** the fabrication computing device **125** monitors the status of a group of welder power sources configured to communicate with the fabrication computing device **125.** The group of welder power sources may be located in a single fabrication environment, or the group of welder power sources may be distributed among multiple locations. At reference numeral **504,** the fabrication computing device **125** monitors for receipt of an informational input indicating an operator identification from the input device **112.** Operator identification may be communicated from the input device **112** in the form of a scan of an indicia on a user's ID badge or other identification source. In another embodiment, the operator identification may be in the form of a biometric reading such as a fingerprint scan, an eye scan, a face scan, or voice recognition. If no operator identification is received or an invalid operator identification is received, the fabrication computing device **125** continues to monitor for receipt of an informational input indicating an operator identification from the input device **112.**

When a valid operator identification is received by the fabrication computing device **125,** the fabrication computing device **125** monitors for receipt of an informational input indicating a weld joint identification at reference numeral **506** from the input device **112.** The weld joint identification may be communicated from the input device **112** in the form of a scan of an indicia on one or more weld workpieces, a scan of an indicia on a weld joint itself, a scan of an indicia on a worksheet or WPS, or an image of a weld joint. If no weld joint identification is received or an invalid weld joint identification is received, the fabrication computing device **125** continues to monitor for receipt of an informational input indicating a weld joint identification from the input device **125.** In certain embodiments, while performing various scans (e.g. scans of the operator identification and weld joint identification), the informational input may be preceded by a command input to provide the fabrication computing device **125** with context for the informational input. Further, the input device **112** may display instructions or prompts to notify the user regarding which informational input should be entered.

When a valid weld joint identification is received by the fabrication computing device **125,** the fabrication computing device **125** assigns and enables a welder power source **110** of the group of welder power sources based on at least one of the operator identification or the weld joint identification at reference numeral **508.** In one embodiment, the fabrication computing device **125** determines whether the user of the input device is qualified to perform a fabrication/welding process associated with the weld joint identification based on the operator identification and the weld joint identification. A user's qualification can be determined based on a set of predefined rules. If the fabrication computing device **125** determines that the user is qualified, the fabrication computing device **125** can enable the welder power source **110** associated with the weld joint. In one embodiment, the welder power source **110** is chosen by the fabrication computing device **125** based on at least one of the operator identification or the weld joint identification. For example, when an operator is known to work out of a particular work station having a particular welder power source **110,** the fabrication computing device **125** can enable that particular welder power source **110** based on the operator's operator identification. In another example, when a weld joint is being welded at a particular work station having a particular welder power source **110,** the fabrication computing device **125** can enable that particular welder power source **110** based on the weld joint identification. In yet another embodiment, the fabrication computing device **125** can receive another informational input indicating a welder power source identification. In this embodiment, the fabrication computing device **125** can enable the welder power source **110** based on the welder power source identification.

After enabling the assigned welder power source **110,** the fabrication computing device **125** can configure the welder power source **110** at reference numeral **510.** The fabrication computing device **125** can configure the welder power source **110** based on pre-programmed settings pertaining to the identified weld joint or the identified operator. In one embodiment, the fabrication computing device **125** can configure the welder power source **110** to operate within certain weld parameter limits for a given weld identified by the weld joint identification. The weld parameter limits may be, for example, a range of operating current or a range of operating voltage. At reference numeral **512** the user can begin performing the welding activity using the welder power source **110** with the configurations provided by the fabrication computing device **125.** While the welding activity is active, the welder power source **110** remains enabled. In certain embodiments, the fabrication computing device **125** can receive one or more welding parameters pertaining to welding activity from the welder power source **110.** For example, the fabrication computing device **125** can receive weld data, statistics, and/or measurements pertaining to the welding activity on the weld joint. The fabrication computing device **125** can associate the one or more welding parameters pertaining to the welding activity with the operator identification. In this manner, data pertaining to the weld joint is associated with the operator such that the finished weld joint can be traced back to the operator who welded the weld joint. Further, while the weld activity is active, the fabrication computing device **125** can transmit instructions pertaining to the fabrication process to the input device **112** for display to a user of the input device **112.** In one embodiment, the instructions include an image of a weld joint to be welded. In another embodiment, the instructions include a request for the user to utilize the input device **112** to receive an additional informational input.

When the welding activity ceases, the fabrication computing device **125** can detect whether the welding activity performed with the welder power source **110** has been inactive for a predetermined amount of time. At reference numeral **514,** the fabrication computing device **125** can disable the assigned welder power source **110** in response to detecting that the welder power source **110** and the welding activity have become inactive for the predetermined amount of time. Upon disabling the welder power source **110,** the welder power source is effectively "locked out" and the user is unable to resume welding activity with the welder power source **110** until the user repeats method **500** by scanning the operator identification and weld joint identification. In one embodiment, if the fabrication computing device **125** determines that the welding activity performed with the welder power source **110** has been inactive for a first amount of time, the fabrication computing device **125** can disable the welder power source **110** and require only receipt of the operator identification to re-enable the welder power source **110.** However, if the welder power source **110** has been inactive for a second amount of time (longer than the first amount of time), the fabrication computing device **125** will require receipt of operator identification, and weld joint identification to re-enable the welder power source **110.**

The following occurs as illustrated in the flow diagram **600** of *Fig. 6**.* Flow diagram **600** relates to an embodiment of a fabrication method performed by a fabrication computing device **125.** At reference numeral **602,** the fabrication computing device **125** monitors the status of a group of welder power sources configured to communicate with the fabrication computing device **125.** The group of welder power sources may be located in a single fabrication environment, or the group of welder power sources may be distributed among multiple locations. At reference numeral **604,** the fabrication computing device **125** monitors for receipt of an informational input indicating an operator identification from the input device **112.** Operator identification may be communicated from the input device **112** in the form of a scan of an indicia on a user's ID badge or other identification source. In another embodiment, the operator identification may be in the form of a biometric reading such as a fingerprint scan, an eye scan, a face scan, or voice recognition. If no operator identification is received or an invalid operator identification is received, the fabrication computing device **125** continues to monitor for receipt of an informational input indicating an operator identification from the input device **112.**

When a valid operator identification is received by the fabrication computing device **125,** the fabrication computing device **125** monitors for receipt of an informational input indicating a work order identification at reference numeral **606** from the input device **112.** The work order identification may be communicated from the input device **112** in the form of a scan of an indicia on a work order itself, on a worksheet or on a WPS. If no work order identification is received or an invalid work order identification is received, the fabrication computing device **125** continues to monitor for receipt of an informational input indicating a work order identification from the input device **125.**

When a valid work order identification is received by the fabrication computing device **125,** the fabrication computing device **125** monitors for receipt of an informational input indicating a consumable identification from the input device **112** at reference numeral **608.** The consumable identification may be communicated from the input device **112** in the form of a scan of an indicia on the consumable itself, on a worksheet, on a WPS, or on packaging of the consumable. If no consumable identification is received or an invalid consumable identification is received, the fabrication computing device **125** continues to monitor for receipt of an informational input indicating a consumable identification from the input device **125.** In certain embodiments, while performing various scans (e.g. scans of the operator identification, work order identification, and/or consumable identification), the informational input may be preceded by a command input to provide the fabrication computing device **125** with context for the informational input. Further, the input device **112** may display instructions or prompts to notify the user regarding which informational input should be entered.

When a valid consumable identification is received by the fabrication computing device **125,** the fabrication computing device **125** assigns and enables a welder power source **110** of the group of welder power sources based on at least one of the operator identification, the work order identification, or the consumable identification at reference numeral **610.** In one embodiment, the fabrication computing device **125** determines whether the user of the input device **112** is qualified to perform a fabrication/welding process associated with the weld joint identification based on the operator identification and the weld joint identification. A user's qualification can be determined based on a set of predefined rules. If the fabrication computing device determines that the user is qualified, the fabrication computing device **125** can enable the welder power source **110** associated with the work order. In one embodiment, the welder power source **110** is chosen by the fabrication computing device **125** based on at least one of the operator identification, the work order identification, or the consumable identification. For example, when an operator is known to work out of a particular work station having a particular welder power source **110,** the fabrication computing device **125** can enable that particular welder power source **110** based on the operator's operator identification. In another example, when a welding operation associated with the identified work order is being performed at a particular work station having a particular welder power source **110,** the fabrication computing device **125** can enable that particular welder power source **110** based on the work order identification. In yet another embodiment, the fabrication computing device **125** can receive another informational input indicating a welder power source identification. In this embodiment, the fabrication computing device **125** can enable the welder power source **110** based on the welder power source identification. In one embodiment, the fabrication computing device **125** can determine whether the consumable identification is appropriate for the work order identification. For example, once the fabrication computing device **125** receives the work order identification, the fabrication computing device **125** may monitor for one or more specific consumable identifications that are considered appropriate for the identified work order. In this embodiment, the fabrication computing device **125** may only enable the assigned welder power source **110** upon receiving a consumable identification that is appropriate for the identified work order. If the fabrication computing device **125** receives a consumable identification that is not appropriate for the work order identification, the fabrication computing device **125** can send a notification to appear on the input device **112** to prompt the user to input an appropriate consumable identification.

After enabling the assigned welder power source **110,** the fabrication computing device **125** can configure the welder power source **110** at reference numeral **612.** The fabrication computing device **125** can configure the welder power source **110** based on pre-programmed settings pertaining to the identified weld joint or the identified operator. In one embodiment, the fabrication computing device **125** can configure the welder power source **110** to operate within certain weld parameter limits for a given welding activity identified by the work order identification. The weld parameter limits may be, for example, a range of operating current or a range of operating voltage. At reference numeral **614** the user can begin performing the welding activity using the welder power source **110** with the configurations provided by the fabrication computing device **125.** While the welding activity is active, the welder power source **110** remains enabled. In certain embodiments, the fabrication computing device **125** can receive one or more welding parameters pertaining to welding activity from the welder power source **110.** For example, the fabrication computing device **125** can receive weld data, statistics, and/or measurements pertaining to the welding activity on the weld joint. The fabrication computing device **125** can associate the one or more welding parameters pertaining to the welding activity with the operator identification. In this manner, data pertaining to the weld joint is associated with the operator such that the finished weld joint can be traced back to the operator who welded the weld joint. Further, while the weld activity is active, the fabrication computing device **125** can transmit instructions pertaining to the fabrication process to the input device **112** for display to a user of the input device **112.** In one embodiment, the instructions include an image of a weld joint to be welded. In another embodiment, the instructions include a request for the user to utilize the input device **112** to receive an additional informational input.

When the welding activity ceases, the fabrication computing device **125** can detect whether the welding activity performed with the welder power source **110** has been inactive for a predetermined amount of time. At reference numeral **616,** the fabrication computing device **125** can disable the assigned welder power source **110** in response to detecting that the welder power source **110** and the welding activity have become inactive for the predetermined amount of time. Upon disabling the welder power source **110,** the welder power source is effectively "locked out" and the user is unable to resume welding activity with the welder power source **110** until the user repeats method **600** by scanning the operator identification, weld joint identification, and consumable identification. In one embodiment, if the fabrication computing device **125** determines that the welding activity performed with the welder power source **110** has been inactive for a first amount of time, the fabrication computing device **125** can disable the welder power source **110** and require only receipt of the operator identification to re-enable the welder power source **110.** However, if the welder power source **110** has been inactive for a second amount of time (longer than the first amount of time), the fabrication computing device **125** will require receipt of operator identification, work order identification, and consumable identification to re-enable the welder power source **110.**

The fabrication computing device **125** can employ a flexible system architecture to allow the use of various types of input devices **112.** The input device **112** can include a display and an imaging device. For example, the input device **112** can be a barcode scanner, a smartphone, a tablet, or a wearable computing device **700.** *Fig. 7* illustrates a diagram of an exemplary embodiment of a wearable computing device **700** that operates as the input device **112** of Fig. 1. The wearable computing device **700** can be configured to be worn as eyeglasses by a user, and includes a frame **702** configured to be worn on the head of a user. The frame **702** includes a bridge **704** configured to be supported on the nose of the user and a brow portion **706** coupled to and extending away from the bridge **704** to a first and second ends remote therefrom and configured to be positioned over the brows of the user.

The frame **702** also includes a first arm **708** having a first end coupled to the first end of the brow portion **706** and extending to a free end, the first arm being configured to be positioned over a first temple of the user with the free end disposed near a first ear of the user. The frame **702** also includes a second arm **710** having a first end coupled to the second end of the brow portion **706** and extending to a free end, the second arm being configured to be positioned over a second temple of the user with the free end disposed near a second ear of the user. The bridge **704** may be adjustable for selective positioning of the brow portion **706** relative to the eyes of the user, in accordance with an embodiment.

The wearable computing device **700** includes a transparent display (e.g., a HUD) **712** affixed to the frame **702.** The HUD **712** may be movable with respect to the frame **702** through rotation about a first axis that extends parallel to the brow portion **706,** in accordance with an embodiment, and may be configured to display text, graphics, and images. The wearable computing device **700** also includes an input device processor **714** enclosed in a housing **716** and affixed to the frame **702.** The input device processor **714** may further include memory, for example. The memory may be coupled to a processor and store software that can be accessed and executed by the processor. The processor may be a microprocessor or a digital signal processor, for example. As an option, the wearable computing device **700** may include a camera **718.** The HUD **712** and the input device processor **714** (and, optionally, the camera **718**) are operatively connected to provide the functionality described herein. In accordance with an embodiment, the camera **718** is configured to capture still pictures and moving video. In this way, a user may record the welding scenario as viewed by the user from inside the welding helmet. Further, the camera **718** can be configured to scan indicia to receive the command inputs and/or informational inputs.

The wearable computing device **700** can further include a communication interface **720.** In accordance with an embodiment, the communication interface **720** provides two-way communication with at least one of the welder power source **110** or the fabrication computing device **125.** Information may be provided from the welder power source **110** and/or the fabrication computing device **125** to the wearable computing device **700** and displayed on the HUD **712.** Furthermore, in accordance with an embodiment, the wearable computing device **700** is configured to accept voice-activated commands from a user and transmit the commands using the communication interface **720** to the welder power source **110.** Communication between the welder power source **110** and the wearable computing device **700** may be accomplished by way of, for example, Bluetooth® radio technology, communication protocols described in IEEE 802.11 (including any IEEE 802.11 revisions) (e.g. Wi-Fi), cellular technology (such as GSM, CDMA, UMTS, EVDO, WiMax, or LTE), or ZigBee® technology, among other possibilities. In accordance with an embodiment, the wearable computing device **700** may also include at least one optical lens **722** that matches a user's corrective visual prescription. In accordance with a further embodiment, the computerized eyewear device may be modular and attachable to normal prescription eye glasses.

Furthermore, in accordance with an embodiment, the welder power source **110** or fabrication computing device **125** may be accessible by the wearable computing device **700** via the Internet. For example, the communication interface **720** may be configured to access the Internet through a wireless hot spot (e.g., a smart phone or a wireless router) and access the welder power source **110** and/or fabrication computing device **125** therethrough. Alternatively, the welder power source **110** and/or fabrication computing device **125** may be configured to access the Internet and provide information obtained from the Internet to the wearable computing device **700.**

Information that may be displayed on the HUD **712** during a real-world welding scenario that may be useful to a welder may be in the form of text, an image, or a graphic. Such information may include, for example, the arc welding process, a welding tool travel angle, a welding tool travel speed, a tip-to-work distance, a wire feed speed, a welding polarity, an output voltage level, an output current level, an arc length, a dime spacing, a whip time, a puddle time, a width of weave, a weave spacing, a tolerance window, a number score, welding sequence steps, an image identifying parts to be welded or a particular weld joint to be welded, a welding instruction, a length of a weld, or an instruction regarding scanning an indicia to indicate a command input or an informational input. Other information may be displayed as well, in accordance with other embodiments. For example, in an augmented mode, instructional indicators that are used in a virtual reality training environment may be superimposed over an actual weld using the HUD **712.** In this manner, a welding student who trained on a virtual reality welding system can transition to a real welding scenario and have the same instructional indicators provided via the HUD **712.** Visual cues or indicators may be displayed to the user on the HUD **712** of the wearable computing device **700** to indicate to the user if a particular parameter (e.g., a welding tool travel angle) is within an acceptable range or not. Such visual cues or indicators may aid in training by helping an inexperienced welder or welding student to improve his or her welding technique.

The acquisition of some of the information may rely on the welding tool **130** being spatially tracked (e.g., travel angle, travel speed, tip-to-work distance). In accordance with an embodiment, the welding tool **130** may include an accelerometer device that is operatively connected to the welder power source **110** to provide spatial position or movement information. Other methods of tracking the welding tool **110** are possible as well, such as magnetic tracking techniques, for example.

In accordance with an embodiment, the wearable computing device **700** includes a microphone **724** for receiving voice-activated commands from a user. The voice-activated commands, as initiated by a user, that may be accommodated by the wearable computing device **700** in communication with the welder power source **110** may include, for example, commands to change a welding parameter such as a wire feed speed, a welding polarity, and a welding output current level. In one embodiment, a user may provide a command input and/or informational input to the fabrication computing device **125** by way of a voice command received by the microphone **724** on the wearable computing device **700.** Other types of commands may be possible as well, in accordance with other embodiments.

In accordance with an embodiment, the wearable computing device **700** and/or the welder power source **110** may be programmed with one or more welding software applications configured to accommodate use of the wearable computing device **700** with the welding system **100.** For example, an embodiment of one welding software application may provide a "good weld" recognition capability. Similar to a facial recognition capability, the "good weld" recognition capability may use the camera **718** to acquire an image of a weld created by the user, analyze the image, and provide feedback to the user on the HUD **712** as to the overall external quality of the weld. For example, the text "poor weld", "fair weld", or "good weld" may be displayed to the user. The user may have to take off his welding helmet or lift a visor on the welding helmet to acquire an image of the weld. The welding software application may reside in the wearable computing device **700,** the welder power source **110,** or a combination of both, in accordance with various embodiments.

As another example, an embodiment of the wearable computing device **700** may interface with the fabrication computing device **125** to receive command inputs and informational inputs and to provide information to the user. When welding a part or assembly with many welds, it is not desirable for a welder to miss a weld or fabrication step. A welding software application may step a welder through the multiple welds for the part. For example, as a welder finishes a current weld on a part or assembly requiring multiple welds, the welder may give a voice command of "next weld". As a result, the welding software application may display to the welder on the HUD **712** an image or graphic (e.g., a 3D representation of the part) providing the location of the next weld to be performed. The type of weld and other information associated with the weld may also be displayed. In accordance with an embodiment where the wearable computing device **700** is being spatially tracked, as discussed later herein, the welding software application may display a graphic on the HUD **712** such that graphic indicator is overlaid onto the assembly at the next location to be welded. Other types of welding software applications that operate with the computerized eyewear device are possible as well, in accordance with other embodiments.

In accordance with an embodiment, the wearable computing device **700** includes at least one motion sensing device operatively connected to the input device processor **714** and configured to provide spatial information to the programmable processor-based subsystem as a user moves his head.

The wearable computing device **700** may receive a command input or informational input in various ways. For example, the wearable computing device **700** may use the camera **718** to scan a barcode or other indicia. In another example, the wearable computing device **700** can use text recognition to read identifying words or an identification number. In another example, the wearable computing device **700** can use image recognition to identify a particular part or weld joint to provide a part identification or weld joint identification. In an embodiment, the wearable computing device **700** can view a weld joint or a workpiece with the camera **718** while the user is performing a weld activity. The wearable computing device **700** and/or the fabrication computing device **125** can employ image recognition to analyze the weld joint or workpiece to determine whether the weld joint and/or workpiece as seen through the wearable computing device **700** is the correct weld joint/workpiece to be welded according to the weld joint identification, WPS, or work order identification. If the weld joint and/or workpiece is incorrect, a notification can be displayed on the HUD **712** to alert the user that the weld joint and/or workpiece is incorrect.

Further features of the wearable computing device **700** include measurement capabilities. In an embodiment, the wearable computing device **700** can be used to measure the length of a weld and report the measurement to the fabrication computing device **125** as a welding parameter. The wearable computing device **700** can also recognize inputs such as user hand gestures and voice activation.

In accordance with the present invention, there is provided a welder system that includes one or more welding power sources, an input device having a display and an imaging device, and a fabrication computer device. The fabrication computing device includes a processor configured to execute computer-executable instructions that configure the fabrication computing device to receive an informational input from the input device. The informational input is based at least in part on an image captured by the imaging device of the input device, and the informational input is indicative of one or more of a weld procedure, an operator identifier, a welding power source identifier, a part identifier, or an operation status. The fabrication computing device is further configured to control operation of at least one welding power source of the one or more welding power sources based on the informational input received.

In an embodiment, the fabrication computing device is further configured to obtain weld information from a welding power source of the one or more welding power sources; and store the welding information in association with at least a portion of the informational input received from the input device.

In an embodiment, the input device is a wearable computing device.

In an embodiment, the input device is configured to capture an image of an indicia to generate the informational input.

In an embodiment, the fabrication computing device is further configured to activate the at least one welding power source based on the informational input received.

In an embodiment, the fabrication computing device is further configured to set a parameter of the at least one welding power source based on the informational input received.

In an embodiment, the fabrication computing device is further configured to receive a command input from the input device, wherein the command input indicates a context for the informational input.

In an embodiment, the display of the input device is configured to display information to guide a user in capturing the informational input.

In one embodiment, a method for interfacing with a fabrication process includes receiving a first informational input from an input device; enabling a welder power source based on the first informational input; receiving one or more welding parameters pertaining to welding activity from the welder power source; and associating the one or more welding parameters with an operator identification.

In an embodiment, the method further includes receiving a second informational input from the input device, wherein the first informational input specifies the operator identification and the second informational input specifies a weld joint identification or work order identification. Enabling the welder power source is based on at least one of the operator identification, the weld joint identification, or the work order identification.

In an embodiment, the method further includes configuring the welder power source based on at least one of the operator identification, the weld joint identification, or the work order identification.

In an embodiment, the method further includes determining whether a user of the input device is qualified to perform the fabrication process based on the operator identification and at least one of the weld joint identification or the work order identification. The power source is enabled based on the user being qualified.

In an embodiment of the method, at least one of the first informational input or the second informational input is an image of an indicia.

In an embodiment, the method further includes detecting that the welding activing has become inactive for a predetermined amount of time; and disabling the welder power source in response to detecting that the welding activity has become inactive for the predetermined amount of time.

In an embodiment, the method further includes communicating instructions pertaining to the fabrication process to the input device for display to a user of the input device.

In an embodiment of the method, the input device is a wearable computing device and the instructions are configured to be displayed on a heads-up display (HUD) of the wearable computing device.

In an embodiment of the method, the instructions comprise an image of a weld joint to be welded.

In an embodiment of the method, the instructions comprise a request for the user to utilize the input device to receive an informational input.

In one embodiment, a fabrication computing device includes a processor, wherein the processor is configured to execute computer-executable instructions that configure the fabrication computing device to receive an informational input from an input device. The informational input is based at least in part on an image captured by an imaging device of the input device, and the informational input is indicative of one or more of a weld procedure, an operator identifier, a welding power source identifier, a part identifier, or an operation status. The fabrication computing device is further configured to control operation of at least one welding power source of the one or more welding power sources based on the informational input received.

In an embodiment, the fabrication computing device is further configured to enable the at least one welding power supply based on the informational input; and disable the at least one welding power supply upon determining that the at least one welding power supply has been inactive for more than a predetermined amount of time.

The above examples are merely illustrative of several possible embodiments of various aspects of the present invention, wherein equivalent alterations and/or modifications will occur to others skilled in the art upon reading and understanding this specification and the annexed drawings. In particular regard to the various functions performed by the above described components (assemblies, devices, systems, circuits, and the like), the terms (including a reference to a "means") used to describe such components are intended to correspond, unless otherwise indicated, to any component, such as hardware, software, or combinations thereof, which performs the specified function of the described component (e.g., that is functionally equivalent), even though not structurally equivalent to the disclosed structure which performs the function in the illustrated implementations of the invention. In addition although a particular feature of the invention may have been disclosed with respect to only one of several implementations, such feature may be combined with one or more other features of the other implementations as may be desired and advantageous for any given or particular application. Also, to the extent that the terms "including", "includes", "having", "has", "with", or variants thereof are used in the detailed description and/or in the claims, such terms are intended to be inclusive in a manner similar to the term "comprising."

This written description uses examples to disclose the invention, including the best mode, and also to enable one of ordinary skill in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that are not different from the literal language of the claims, or if they include equivalent structural elements with insubstantial differences from the literal language of the claims.

The best mode for carrying out the invention has been described for purposes of illustrating the best mode known to the applicant at the time. The examples are illustrative only and not meant to limit the invention, as measured by the scope and merit of the claims. The invention has been described with reference to preferred and alternate embodiments. Obviously, modifications and alterations will occur to others upon the reading and understanding of the specification. It is intended to include all such modifications and alterations insofar as they come within the scope of the appended claims or the equivalents thereof.

**Reference numbers**

| | | | |
|---|---|---|---|
| 100 | welding system | 404 | step |
| 105 | welding circuit path | 406 | step |
| 110 | welder power source | 408 | step |
| 112 | input device | 410 | step |
| 115 | display | 412 | step |
| 120 | welding cable | 414 | step |
| 125 | fabrication computing device | 500 | method / flow diagram |
| 127 | processor | 502 | step |
| 130 | welding tool | 504 | step |
| 140 | workpiece | 506 | step |
| 150 | workpiece connector | 508 | step |
| 160 | wire | 510 | step |
| 170 | wire feeder | 512 | step |
| 180 | wire | 514 | step |
| 200 | system | 600 | method / flow diagram |
| 210 | computing platform | 602 | step |
| 215 | power source | 604 | step |
| 220 | second welder power source | 606 | step |
| 230 | Nth welder power source | 608 | step |
| 235 | processing component | 610 | step |
| 240 | processing component | 612 | step |
| 245 | processing component | 614 | step |
| 250 | data store | 700 | wearable computing device |
| 255 | data store | 702 | frame |
| 260 | data store | 704 | bridge |
| 300 | welding system | 706 | brow portion |
| 302 | command input | 708 | first arm |
| 304 | informational input | 710 | second arm |
| 306 | step | 712 | transparent dislay (HUD) |
| 310 | welder power source | 714 | device processor |
| 320 | welder power source | 716 | housing |
| 322 | command input | 718 | camera |
| 324 | informational input | 720 | communication interface |
| 326 | step | 722 | optical lense |
| 400 | flow diagram / restart method | 724 | microphone |
| 402 | step | | |

## Claims

1. A fabrication computing device (125) having a processor (127), wherein the processor (127) is configured to execute computer-executable instructions that configure the fabrication computing device (125) to:
receive an informational input from an input device (112), **characterized in that** the informational input is based at least in part on an image captured by an imaging device of the input device (112), and the informational input is indicative of one or more of a weld procedure, an operator identifier, a welding power source identifier, a part identifier, or an operation status; and
control operation of at least one welding power source (110) of one or more welding power sources (110) based on the informational input received.

2. The fabrication computing device of claim 1, wherein the fabrication computing device (125) is further configured to:
enable the at least one welding power supply (110) based on the informational input; and
disable the at least one welding power supply (110) upon determining that the at least one welding power supply (110) has been inactive for more than a predetermined amount of time.

3. The fabrication computing device of claim 1 or 2, further configured to:
obtain weld information from a welding power source (110) of the one or more welding power sources; and
store the welding information in association with at least a portion of the informational input received from the input device (112).

4. The fabrication computing device of one of the claims 1 to 3, further configured to activate the at least one welding power source (110) based on the informational input received.

5. The fabrication computing device of one of the claims 1 to 4, further configured to set a parameter of the at least one welding power source (110) based on the informational input received.

6. The fabrication computing device of one of the claims 1 to 5, further configured to receive a command input from the input device (112), wherein the command input indicates a context for the informational input.

7. A welding system in a welding fabrication environment, comprising:
one or more welding power sources (110);
an input device (112) having a display (115) and an imaging device; and
**characterized by** a fabrication computing according to one of the claims 1 to 6.

8. The welding system of claim 7, wherein the input device (112) is a wearable computing device; and/or wherein the input device (112) is configured to capture an image of an indicia to generate the informational input.

9. The welding system of claim 7 or 8, wherein the display (115) of the input device (112) is configured to display information to guide a user in capturing the informational input.

10. A method for interfacing with a fabrication process, comprising:
receiving a first informational input from an input device (112);
**characterized by**:
enabling (508) a welder power source (110) based on the first informational input;
receiving one or more welding parameters pertaining to welding activity from the welder power source (110); and
associating the one or more welding parameters with an operator identification.

11. The method of claim 10, further comprising:
receiving a second informational input from the input device (112), wherein the first informational input specifies the operator identification (504) and the second informational input specifies a weld joint identification (506) or work order identification, and enabling the welder power source (110) is based on at least one of the operator identification, the weld joint identification, or the work order identification.

12. The method of claim 11, further comprising:
configuring (510) the welder power source based on at least one of the operator identification, the weld joint identification, or the work order identification; and/or
further comprising:
determining whether a user of the input device is qualified to perform the fabrication process based on the operator identification and at least one of the weld joint identification or the work order identification, wherein the power source is enabled based on the user being qualified; and/or
wherein at least one of the first informational input or the second informational input is an image of an indicia.

13. The method of one of the claims 10 to 12, further comprising:
detecting that the welding activing has become inactive for a predetermined amount of time; and
disabling the welder power source in response to detecting that the welding activity has become inactive for the predetermined amount of time.

14. The method of one of the claims 10 to 13, further comprising:
communicating instructions pertaining to the fabrication process to the input device for display to a user of the input device.

15. The method of claim 14, wherein the input (112) device is a wearable computing device and the instructions are configured to be displayed on a heads-up display (HUD) of the wearable computing device; and/or wherein the instructions comprise an image of a weld joint to be welded; and/or wherein the instructions comprise a request for the user to utilize the input device (112) to receive an informational input.
